# EUROPEAN PATENT SPECIFICATION

(11) **EP 3 871 980 B1**
(45) Date of publication and mention of the grant of the patent: **13.08.2025**
(21) Application number: 21157243.3
(22) Date of filing: 15.02.2021
(51) Int. Cl.: B64D 33/02, B64C 7/00

(54) **AIRCRAFT STRUCTURE HAVING AN INLET OPENING FOR ENGINE AIR**
FLUGZEUGSTRUKTUR MIT EINER EINLASSÖFFNUNG FÜR MOTORLUFT
STRUCTURE D'AÉRONEF DOTÉE D'UNE OUVERTURE D'ADMISSION D'AIR D'UN MOTEUR

(30) Priority: 26.02.2020 DE 102020004273
(43) Date of publication of application: 01.09.2021
(73) Proprietor: Airbus Defence and Space GmbH, 82024 Taufkirchen (DE)
(72) Inventor: EHRMAYR, Robert, 82024 Taufkirchen (DE); BERENS, Thomas, 82024 Taufkirchen (DE)
(74) Representative: LKGLOBAL Lorenz & Kopf Patentanwalt Attorney at Law PartG mbB

(56) References cited:
- EP-A1- 0 810 357
- EP-A1- 3 109 153
- EP-A1- 3 412 563
- US-A- 3 066 892
- US-A- 5 779 189
- US-A1- 2020 002 020

## Description

### Technical field

The description relates to an aircraft structure, in particular for a supersonic aircraft, and particularly concerns the configuration of an air inlet for receiving air for an engine.

### Technical background

Jet engines are supplied with air and a fuel in order to generate drive energy for an aircraft therefrom. The air is received from the surroundings of the aircraft and is fed to the jet engine via an inlet opening.

For high performance levels or a high drive power of the jet engine, it is advantageous if the inlet flow, that is to say the air received into the inlet opening, has a high degree of energy. In order to achieve this, elevations (so-called bumps) can be arranged on the outer surface of the aircraft and are placed with respect to the inlet openings in such a way that the boundary layer of the flow, which is generated on the outer skin of the aircraft, is deflected away from the inlet opening. The flow boundary layer typically has a lower energy than the air flow spaced apart from the aircraft. By thus deflecting the boundary layer fluid away from the inlet opening, an air flow of higher energy is received into the inlet opening in order to be fed to the jet engine.

US 5 779 189 describes a jet aircraft having an inlet opening for engine air. The inlet opening is either arranged laterally on the fuselage of the jet aircraft and in front of the wing or on an underside of the wing and at a distance from the fuselage of the jet aircraft. On or shortly in front of the inlet opening there is arranged an elevation, a so-called bump, which deflects away from the inlet opening the boundary layer fluid of the air layer bearing on the jet aircraft.

US 3 066 892 A1 describes air intakes for air consuming propulsion engines with two tampered ramp bodies of curved cross section that are mounted co-axially at the intake with their bases facing one another, one pointing forward upstream of the lip of an intake cowl, the other pointing back into said cowl. Both bodies have straight or curved generatrices and are hinged transversely of their longitudinal axes about a point at or near their apices and can be raised and lowered about their hinge axes.

EP 3 109 153 A1 describes a swept gradient air boundary layer diverter for an aircraft. The aircraft includes a fuselage and an air inlet for an engine of the aircraft, where the air inlet includes a cowl at a leading edge of the inlet. The diverter includes a V-shaped ramp portion formed in the fuselage in an area proximate to and in front of the cowl where the ramp portion extends downward away from an outer surface of the fuselage towards an inside of the aircraft. The diverter also includes a V-shaped trough portion formed into the fuselage and being positioned adjacent to and integral with the ramp portion between the ramp portion and the air inlet. Air flowing over the fuselage towards the cowl is expanded and compressed by the ramp portion and the trough portion so as to create pressure gradients that generate vortices to redirect boundary layer airflow around the air inlet.

US 2020/002020 A1 describes a flight vehicle engine inlet with internal diverter. The inlet includes an internal flow diverter to divert boundary layer flow. The flow diverter is configured to minimize disruption to flow outside the diverted boundary by being configured through use of a flow field that is also used to configure the walls of the inlet. The flow field that is used to configure an inlet-creating shape and a diverter-creating shape has the same flow generator, contraction ratio, compression ratio, mass capture ratio, pressure ratio between entrance and exit, and/or Mach number. The internal diverter allows arbitrary selection of a leading edge shape for the internal diverter.

EP 3 412 563 A1 describes a device for a variable and adaptable diverterless bump inlet. The diverterless bump inlet is an engine inlet typically used in high-speed aircraft to generate a shock in order to compress the airflow and to divert the low-energy forebody boundary layer, thus preventing most of this forebody boundary layer from being ingested into the engine air intake. The engine inlet comprises a flexible inlet, a mechanism to change the shape of the flexible inlet, and a processing unit to control the mechanism. The flexible inlet of the device includes plurality of edges attached partly to a fuselage skin and partly to an engine inlet duct.

### Description of the invention

It can be considered as the object to describe an aircraft structure which makes it possible to supply an engine with high-energy air and to improve the manoeuvrability of an aircraft using the aircraft structure.

This object is achieved by the subject matter of the independent claim. Developments result from the dependent claims and from the following description.

According to one aspect of the invention, an aircraft structure is specified that has a fuselage, a wing and an air inlet for receiving air for an engine. The air inlet has an elevation which rises from a surface of the fuselage and from a surface of the wing, wherein the elevation is configured to deflect, from an opening of the air inlet, a boundary layer fluid of a low-energy boundary layer forming on an outer surface of the aircraft structure in flight. The air inlet further has a housing which surrounds the elevation, with the result that the opening for receiving air for the engine is formed between the housing and elevation. A front edge surface of the housing is situated, with respect to a longitudinal axis of the aircraft structure, further to the rear of the aircraft structure than a foremost point of the elevation. The elevation is arranged in a transition region between the wing and the fuselage. The elevation extends asymmetrically with respect to an angle bisector of an angle between the surface of the wing and the surface of the fuselage. Said angle is spanned between the wing and the fuselage, the angle being defined by a position and orientation of an underside of the wing and a lateral surface of the fuselage at the point at which the wing and the fuselage adjoin one another or meet one another. A contour line or height line of the elevation is defined at each station along the longitudinal axis in a front view. The angle and the angle bisector are defined at each station along the longitudinal axis. The contour line corresponds to the profile of the surface of the elevation at its highest point or at its region furthest removed from the surface of the wing and the fuselage. At its one end, the contour line hugs the surface of the wing with a first radius of curvature and, at the other end, hugs the surface of the fuselage with a second radius of curvature. The contour line is multiply curved. From the wing to the fuselage, the contour line contains a right-hand curvature which transitions into a left-hand curvature which in turn transitions into a right-hand curvature. The first radius of curvature is arranged nearer the wing than the fuselage. The second radius of curvature is arranged nearer the fuselage than the wing. The first radius of curvature is greater than the second radius of curvature such that the curvature of the contour line in the region of the first radius of curvature is less pronounced than in the region of the second radius of curvature. With respect to the angle bisector, the contour line and the height lines of the elevation are asymmetrical such that the basic profile of the height lines of the elevation correspond to the profile of the contour line, the respective shape being the same with only the dimensions being different.

The aircraft structure is particularly suitable for use on a jet aircraft. The description herein applies generally to an aircraft structure and a jet aircraft having such an aircraft structure or a jet aircraft whose structure is configured according to the principles described herein.

Even though in the present case there is described only the construction of an individual air inlet on one side of the aircraft structure in connection with a wing and the fuselage, it should be understood that a similar air inlet (in particular of mirror-inverted construction) is arranged between the opposite wing and the opposite lateral surface of the fuselage on the other side of the aircraft structure.

For example, the air inlet and the elevation are arranged on an underside of a wing and the adjoining lateral surface of the fuselage, that is to say in a transition region between the wing and fuselage on the underside of the wing or at an angle which is spanned by the underside of the wing and the adjoining lateral surface of the fuselage. The underside of the wing is to be understood as meaning that surface of the wing which points downwards during a typical orientation of the aircraft structure in flight or else in a parked position, with the direction indications "upwards/downwards" in this coordinate system relating to the vector of the Earth's gravitational force. The direction indication "downwards" points in the direction of the Earth's surface, with "upwards" pointing away therefrom.

Alternatively, the air inlet and the elevation can be arranged on an upper side of the wing and the adjoining lateral surface of the fuselage, that is to say in a transition region between the wing and fuselage on the upper side of the wing or at an angle which is spanned by the upper side of the wing and the adjoining lateral surface of the fuselage. The upper side of the wing is to be understood as meaning that surface of the wing which points upwards during a typical orientation of the aircraft structure in flight or else in a parked position, with the coordinate system introduced above applying to the direction indications "upwards/downwards".

The air inlet is configured to receive air from the surroundings and to feed it to an engine, in particular a jet engine, and, in combination with a fuel or propellant, to generate drive energy for the aircraft. The air is channelled from the air inlet to the engine via suitable mechanisms which are known in principle.

The air inlet refers in the present case to the entirety of the structural and functional elements which, individually and/or in their interaction, ensure that air is received from the surroundings and fed for further use. In particular, the air inlet includes an elevation or a projection which rises with respect to the surface of the fuselage and the underside or upper side of the wing. The function of this elevation (the so-called bump) is to deflect from an opening of the air inlet a boundary layer fluid of a low-energy boundary layer forming on the outer surface of the aircraft structure in flight. The boundary layer contains a low-energy air flow. For a jet engine, it is advantageous to feed air flow of higher energy in order to improve the performance of the jet engine. Because the elevation deflects the air of the boundary layer (the boundary layer fluid) around the opening of the air inlet or deflects it away from the opening of the air inlet, air flow of higher energy can enter the opening.

In general, the elevation is thus a geometric deformation of the surface of the fuselage and of the wing in order to generate a relative elevation which influences the flow of the boundary layer. The elevation can arise as a result of deformation of the surface and be arranged without an additional element on the surface of the fuselage and of the wing. In principle, however, the elevation can also be individually formed independently of the aircraft structure and be mounted and suitably fastened as an additional element on the fuselage and wing.

In connection with supersonic aircraft, the elevation can also have the function of contributing to the slowing down of the air flow for the engine to subsonic speed. Apart from the elevation, there is preferably arranged no further element on the surface of the aircraft structure that is used for guiding or deflecting the boundary layer fluid around the opening of the air inlet.

An angle is spanned between the surface of the wing, in particular the underside or upper side of the wing, and the surface of the fuselage, in particular a lateral surface of the fuselage. This angle is spanned by the lateral direction of extent of the wing (extent in the direction of a transverse axis of the aircraft structure) and the surface of the fuselage at the point at which the wing meets the fuselage (or at a tangent to this point).

The elevation extends asymmetrically with respect to an angle bisector of the angle between the underside or upper side of the wing and the lateral surface of the fuselage. This means for example that the elevation extends to an unequal degree and/or in a different way along the underside or upper side of the wing and the lateral surface of the fuselage.

This asymmetrical shape of the elevation allows a particularly advantageous deflection of the boundary layer fluid around the air inlet and the other aircraft structure in general and ensures a boundary layer of reduced size.

According to the invention, the elevation has a multiply curved contour line.

The contour line of the elevation is that contour which can be seen from a viewing direction which corresponds to the incident flow direction of the aircraft structure in flight. The multiply curved contour line has for example a central hump which is surrounded laterally by in each case two relative depressions. This shape can guide the boundary layer fluid via the elevation in a flow direction at a variable angle with respect to the longitudinal direction of the aircraft structure.

According to the invention, the contour line extends asymmetrically with respect to the angle bisector.

This construction of the elevation makes it possible for the boundary layer fluid to be deflected in an advantageous manner along the outer skin of the aircraft. Thus, for example, a larger part of the elevation can extend along the lateral surface of the fuselage than along the underside or upper side of the wing, or vice versa. It is equally possible for the shape of the contour line of the elevation along the underside or upper side of the wing to extend differently than along the lateral surface of the fuselage.

According to the invention, the contour line hugs the surface of the wing with a first radius of curvature and hugs the surface of the fuselage with a second radius of curvature.

In other words, the surface of the elevation approaches the underside or upper side of the wing and the lateral surface of the fuselage. The first radius of curvature does not have to extend directly up to the surface of the wing. Rather, the region of the contour line having the first radius of curvature can be arranged between the angle bisector and the wing. It analogously applies to the second radius of curvature that the region having the second radius of curvature does not have to extend directly up to the lateral surface of the fuselage, but can be arranged generally between the angle bisector of the angle between the wing and fuselage and the lateral surface of the fuselage.

According to the invention, the first radius of curvature is greater than the second radius of curvature.

Generally, the contour line of the elevation approaches the wing in a different way than it approaches the fuselage, as already expressed by the asymmetrical profile of the contour line. By virtue of the different configuration of the first and second radius of curvature, the profile and the dimensions of the boundary layer along the wing and the fuselage can be optimized.

According to an embodiment, the wing overlaps the elevation in a direction along a longitudinal axis of the aircraft structure.

This means that the elevation and the air inlet overall are arranged at least partially or else completely below the wing and nevertheless adjoin the lateral surface of the fuselage, that is to say that the elevation is arranged at an angle between the underside or upper side of the wing and the adjoining lateral surfaces of the fuselage.

In this configuration, the leading edge of the wing (front edge of the wing) can be arranged further forward along the longitudinal axis than the air inlet, in particular further forward than the elevation (bump) of the air inlet. This configuration variant has the advantage that the manoeuvrability of an aircraft is improved. The further forward the leading edge of the wings adjoins the fuselage, the better can be the manoeuvrability of the aircraft, because this design variant allows more lift in the high angle of attack range.

According to the invention, the air inlet further has a housing (typically referred to as a cowl) which surrounds the elevation, with the result that an opening for receiving air for the engine is formed between the housing and elevation.

According to a further embodiment, the wing overlaps the housing in a direction along a longitudinal axis of the aircraft structure.

That is to say that, in one variant, both the elevation and the housing are situated below the wing, wherein the leading edge of the wing is further forward in the longitudinal direction of the aircraft (in the direction of the tip of the aircraft structure, in the flight direction) than the housing and the elevation.

According to a further embodiment, the opening is enclosed by the housing, the surface of the fuselage, the elevation and the surface of the wing.

The housing can thus enclose a larger region of the surface of the aircraft structure than just the elevation. However, it is also conceivable in principle for the lateral extensions or ends of the contour line of the elevation to transition into the housing.

According to a further embodiment, the housing has a front edge surface, wherein the front edge surface defines a border of the opening, and wherein the front edge surface is rounded.

The front edge surface of the bordering is rounded rearwardly, that is to say along the longitudinal axis of the aircraft structure, in the incident flow direction of the air. The profile and the dimension of the boundary layer can also be positively influenced as a result.

### Brief description of the drawings

Further details are described with reference to the figures. The figures are schematic and not true to scale.
- Fig. 1: shows a schematic illustration of an aircraft structure in plan view.
- Fig. 2: shows a schematic illustration of an aircraft structure having an air inlet between the wing and fuselage.
- Fig. 3: shows a schematic illustration of an aircraft structure having an elevation between the wing and fuselage.
- Fig. 4: shows a schematic illustration of an aircraft structure in plan view having an air inlet below the wing.
- Fig. 5: shows a schematic illustration of an aircraft structure having an elevation between the wing and fuselage.

### Detailed description of embodiments

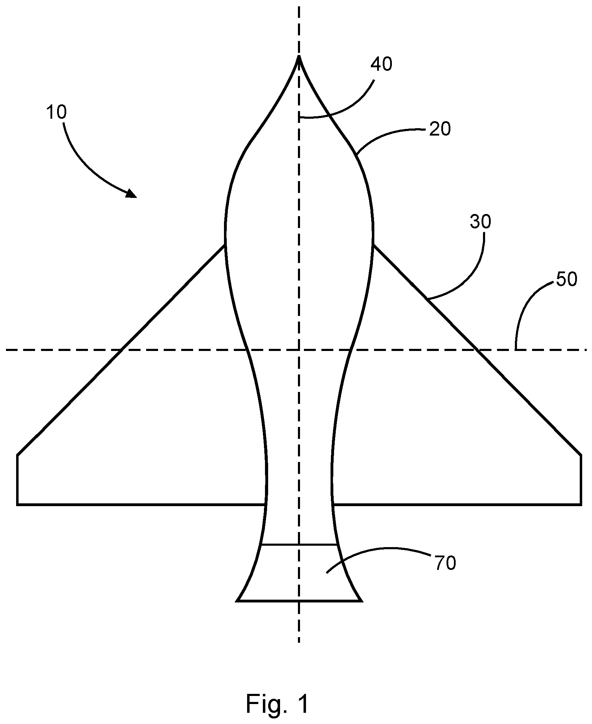

Fig. 1 shows an aircraft structure 10 having a fuselage 20 and two wings 30 which are arranged laterally on opposite sides of the fuselage 20. In the illustration of Fig. 1, the longitudinal axis 40 of the aircraft structure 10 extends from the top (tip of the aircraft structure, at the front in the sense of the flight direction) to the bottom (tail of the aircraft structure, at the rear in the sense of the flight direction). The transverse axis 50 of the aircraft structure extends transversely with respect to the longitudinal axis 40 and from wing to wing.

The aircraft structure 10 has one or more engines 70. The engines can be arranged at various positions on the aircraft structure. The illustration of Fig. 1 is to be seen merely by way of example. The engines 70 are supplied with air from the surroundings of the aircraft structure. The air is used together with a fuel in order to provide drive energy.

The aircraft structure 10 of Fig. 1 can be part of an aircraft, in particular an aircraft having a jet engine, further in particular of a supersonic aircraft.

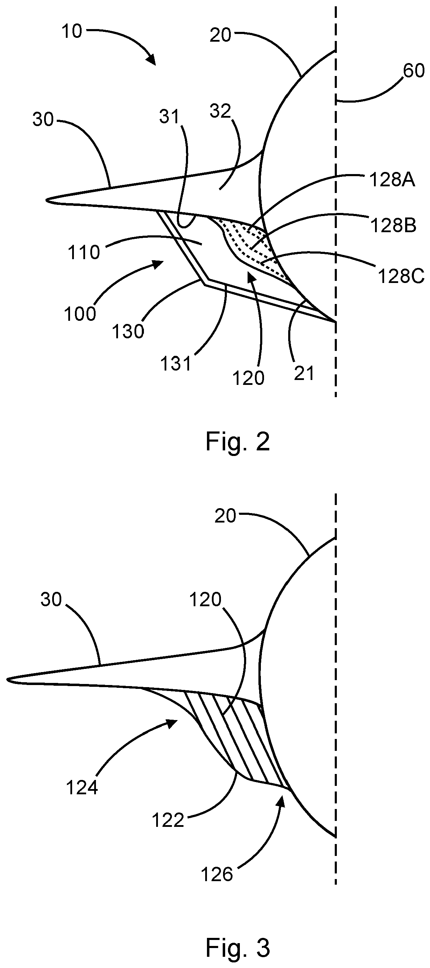

Fig. 2 shows a front view of an aircraft structure 10, that is to say from a viewing direction of the incident flow direction of the air during flight. Fig. 2 shows only one side of the aircraft structure 10. It should be understood that the second side of the aircraft structure 10 is of analogous construction, in particular of mirror-inverted construction to the side shown in Fig. 2.

The wing 30 extends in the direction of the transverse axis 50 (see Fig. 1) from the fuselage 20. At an angle between the surface 31 (in this example: underside) of the wing 30 and a lateral surface 21 of the fuselage 20 there is arranged an air inlet 100 having an elevation 120 and a housing 130 surrounding the elevation 120. Between the elevation 120 and the housing 130 there is formed an opening 110 through which air flows to the engine.

The elevation 120 is arranged in a transition region between the wing 30 and fuselage 20, that is to say that the elevation bears partially against the wing 30 and partially against the fuselage 20.

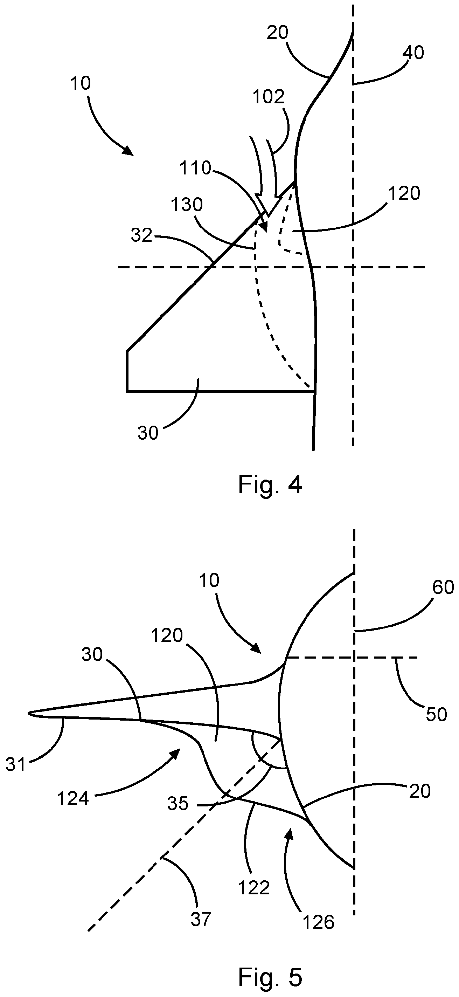

The leading edge 32 of the wing 30 is situated further forward (in the direction out of the drawing plane) in the direction of the longitudinal axis of the aircraft structure than at least one part of the air inlet 100, as can be possibly better recognized in Fig. 4.

The height of the elevation increases from the front to the rear (with respect to the longitudinal axis and in the direction of the incident flow of the aircraft in flight), wherein the height of the elevation is to be understood as meaning the distance of the surface of the elevation from the wing and the fuselage without elevation.

In Fig. 2, three height lines 128A, 128B, 128C of the elevation 120 are depicted as dashed lines by way of example. The height line 128A having the lowest height (that is to say the height line which is nearest the transition between the wing and fuselage) is situated the furthest forward with respect to the longitudinal axis of the aircraft structure. The height of the elevation 120 increases with increasing movement towards the rear along the longitudinal axis, as shown by the following height lines 128B and 128C situated further outward. The height increases further until the outermost contour of the elevation is reached, with the contour of the elevation 120 being illustrated by a solid line.

The housing 130 is shown in Fig. 2 in such a way that the points at which the housing 130 adjoins the wing 30 and the fuselage 20 are spaced apart outwardly or downwardly from the elevation 120. The larger this spacing, the larger also tends to be the opening 110. The spacing between the elevation 120 and housing 130 can vary.

The housing 130 has a front edge surface 131. The front edge surface 131 can be rounded towards the rear, for example in the form of a semicircle or some other regular or irregular shape.

It is pointed out that the air inlet 100 together with the associated components (elevation 120, housing 130, opening 110 formed therebetween) can, as an alternative to the placement between the underside 31 and fuselage 20, also be arranged in a transition region between the upper side (opposite the underside 31) of the wing 30 and the fuselage 20. For this placement of the air inlet 100 between the upper side and fuselage, the same principles apply here as are described in this description with respect to the placement between the underside and fuselage. This particularly applies to the configuration and shape of the elevation 120 and the relative arrangement thereof with respect to the wing, the fuselage and the housing. The mere fact that the figures merely show an air inlet on the underside of the wing does not mean that this description is limited to this variant.

Fig. 3 shows a further illustration of an aircraft structure 10 similar to the aircraft structure from Fig. 2. However, the housing is not illustrated in Fig. 3 for reasons of clarity.

In the front view of Fig. 3, the elevation 120 has a contour line 122 which corresponds to the profile of the surface of the elevation at its highest point or at its region furthest removed from the surface of the wing and the fuselage. At its one end, the contour line 122 hugs the wing 30 and, at the other end, the fuselage 20. The contour line 122 is multiply curved; in Fig. 3, the contour line contains, from left to right (that is to say from the wing to the fuselage), a right-hand curvature, which transitions into a left-hand curvature, which in turn transitions into a right-hand curvature.

The first radius of curvature 124 is arranged on the wing side (nearer the wing than the fuselage). The second radius of curvature 126 is arranged on the fuselage side (nearer the fuselage than the wing). The first radius of curvature 124 is greater than the second radius of curvature 126, that is to say that the curvature of the contour line 122 in the region of the first radius of curvature 124 is less pronounced than in the region of the second radius of curvature 126. This configuration of the contour line deflects the boundary layer fluid in an advantageous manner around the air inlet and keeps the dimensions and the thickness of the boundary layer to advantageous values, in particular if the elevation is arranged in the transition region between the wing and fuselage and the leading edge of the wing is further forward than a part of the air inlet or the entire air inlet.

The statements relating to the shape of the contour line 122 in Fig. 3 of course also apply to the contour line of the elevation from other embodiments. These statements can equally apply to some or all height lines 128A, 128B, 128C of the elevation (see Fig. 2). The basic profile of the height lines of the elevation can correspond to the profile of the contour line, that is to say that the respective shape is the same, with only the dimensions being different.

Fig. 4 is a plan view showing a schematic illustration of an aircraft structure 10 in order to show the arrangement of the elevation 120, of the opening 110 and of the housing 130 with respect to the wing 30 and the leading edge 32 of the wing 30.

The elevation 120 and the housing 130 are shown by dashed lines. Between the elevation 120 and housing 130 is situated the opening 110 in order to receive an air flow 102.

First of all, it can be seen that the elevation 120 and the housing 130 are arranged laterally on the fuselage 20 and extend in the transverse direction, that is to say along the transverse axis, from the fuselage 20. The elevation 120 widens from the front to the rear (in Fig. 4 from top to bottom) along a longitudinal axis of the aircraft structure, that is to say that the height of the elevation increases as already described further above. In other words, the height of the elevation 120 increases the further along the longitudinal axis 40 towards the rear one moves. This applies up to the point of the maximum height. Behind the point of the maximum height, the height of the elevation then decreases again and hugs the fuselage.

As can be gathered from Fig. 4, the elevation 120 is arranged completely below the wing 30, that is to say that the point at which the elevation 120 projects from the fuselage is situated behind the leading edge 32 of the wing. It should be noted that the elevation simultaneously projects from the underside of the wing, because it is arranged in the transition region between the wing and the fuselage; see Figs. 2 and 3. However, this aspect cannot be seen in the plan view.

For reasons of clarity, all that is shown of the housing 130, by way of a dashed line, is the profile of the housing on the underside of the wing. The foremost point of the housing, that is to say the front edge surface 131 (see Fig. 2), is situated, with respect to the longitudinal axis 40, further to the rear than the foremost point of the elevation 120. The point of the maximum height of the elevation can be situated in front of or behind the front edge surface 131 of the housing 130, that is to say inside or outside the housing 130. This parameter can be varied in dependence on the geometry of the aircraft structure and the desired flow and flight properties.

Fig. 5 shows, as a supplement to the illustration in Fig. 3, the asymmetry of the elevation 120 in a front view of the aircraft structure 10. The elements and properties which have already been described with reference to Fig. 3 will not be described again.

An angle 35 is spanned between the wing 30 and the fuselage 20. This angle is defined by the position and orientation of the underside of the wing and the lateral surface of the fuselage at the point at which the wing and the fuselage adjoin one another or meet one another.

For the angle 35 between the wing 30 and fuselage 20 there is illustrated an angle bisector 37 as a dashed line. With respect to the angle bisector 37, the contour line 122 of the elevation 120 is asymmetrical. This means that the radii of curvature 124, 126 are different or that the elevation is generally arranged asymmetrically at the angle 35 between the wing and fuselage, that is to say is displaced in the direction of the fuselage or in the direction of the wing. Such a displacement can be recognized by the fact that the distance between the lateral surface of the fuselage and an outermost point of the elevation 120 along the transverse axis 50 is greater than or smaller than a distance between the underside of the wing 30 and an outermost point of the elevation 120 along the vertical axis 60.

It is pointed out that "comprising" or "having" does not exclude any other elements or steps nor any higher number of elements and steps than explicitly specified, than specified in the claims and/or the description. "A", "an" or "one" does not exclude a plurality. Features or steps which have been described with reference to one of the above exemplary embodiments can also be used in combination with other features or steps of other above-described exemplary embodiments. Reference signs in the claims are not to be considered as a limitation.

### List of reference signs

- 10: Aircraft structure
- 20: Fuselage
- 21: Surface
- 30: Wing
- 31: Surface
- 32: Leading edge
- 35: Angle
- 37: Angle bisector
- 40: Longitudinal axis
- 50: Transverse axis
- 60: Vertical axis
- 70: Engine
- 100: Air inlet
- 102: Air flow
- 110: Opening
- 120: Elevation
- 122: Contour line
- 124: First radius of curvature
- 126: Second radius of curvature
- 128: Height lines
- 130: Housing
- 131: Front edge surface

## Claims

1. Aircraft structure (10), having:
a fuselage (20);
a wing (30);
an air inlet (100) for receiving air for an engine (70);
wherein the air inlet (100) has an elevation (120) which rises from a surface (21) of the fuselage (20) and from a surface (31) of the wing (30), wherein the elevation (120) is configured to deflect, from an opening of the air inlet (100), a boundary layer fluid of a low-energy boundary layer forming on an outer surface of the aircraft structure in flight;
wherein the air inlet (100) further has a housing (130) which surrounds the elevation (120), with the result that the opening (110) for receiving air for the engine (70) is formed between the housing (130) and elevation (120);
wherein a front edge surface (131) of the housing (130) is situated, with respect to a longitudinal axis (40) of the aircraft structure (10), further to the rear of the aircraft structure than a foremost point of the elevation (120);
wherein the elevation (120) is arranged in a transition region between the wing (30) and the fuselage (20);
**characterized in that**
stations being defined along the longitudinal axis, at each station the elevation (120) extends asymmetrically with respect to an angle bisector (37) of an angle (35) between the surface (31) of the wing (30) and the surface (21) of the fuselage (20);
said angle (35) is spanned between the wing (30) and the fuselage (20), the angle (35) being defined by a position and orientation of an underside (31) of the wing (30) and a lateral surface of the fuselage (20) at the point at which the wing (30) and the fuselage (20) adjoin one another or meet one another;
a height line (128A, 128B, 128C) of the elevation (120) is defined at each station along the longitudinal axis (40) in a front view;
the angle (35) and the angle bisector (37) are defined at each station along the longitudinal axis (40);
a contour line (122) corresponds, in a front view, to the profile of the surface of the elevation (120) at its region furthest removed from the surface of the wing (30) and the fuselage (20);
at its one end, the contour line (122) hugs the surface of the wing (30) with a first radius of curvature (124) and, at the other end, hugs the surface of the fuselage (20) with a second radius of curvature (126);
the contour line (122) is multiply curved;
from the wing (30) to the fuselage, the wing being a right-hand wing seen in a front view, the contour line (122) contains a right-hand curvature which transitions into a left-hand curvature which in turn transitions into a right-hand curvature;
the first radius of curvature (124) is arranged nearer the wing than the fuselage;
the second radius of curvature (126) is arranged nearer the fuselage than the wing;
the first radius of curvature (124) is greater than the second radius of curvature (126) such that the curvature of the contour line (122) in the region of the first radius of curvature (124) is less pronounced than in the region of the second radius of curvature (126);
with respect to the angle bisector (37), the contour line (122) and the height lines (128A, 128B, 128C) of the elevation (120) are asymmetrical such that the basic profile of the height lines (128A, 128B, 128C) of the elevation (120) correspond to the profile of the contour line, the respective shape being the same with only the dimensions being different.

2. Aircraft structure (10) according to claim 1,
wherein the wing (30) overlaps the elevation (120) in a direction along a longitudinal axis (40) of the aircraft structure (10).

3. Aircraft structure (10) according to claim 1 or 2,
wherein the wing (30) overlaps the housing (130) in a direction along a longitudinal axis (40) of the aircraft structure (10).

4. Aircraft structure (10) according to one of the preceding claims,
wherein the opening (110) is enclosed by the housing (130), the surface (21) of the fuselage (20), the elevation (120) and the surface (31) of the wing (30).

5. Aircraft structure (10) according to one of the preceding claims,
wherein the housing (130) has a front edge surface (131) which defines a border of the opening;
wherein the front edge surface (131) is rounded.

## Patentansprüche

1. Flugzeugstruktur (10), aufweisend:
einen Rumpf (20);
einen Flügel (30);
einen Lufteinlass (100) zum Aufnehmen von Luft für ein Triebwerk (70);
wobei der Lufteinlass (100) eine Erhebung (120) aufweist, die sich von einer Oberfläche (21) des Rumpfs (20) und von einer Oberfläche (31) des Flügels (30) erhebt, wobei die Erhebung (120) dazu ausgebildet ist, von einer Öffnung des Lufteinlasses (100), ein Grenzschichtfluid einer sich im Flug an einer Außenfläche der Flugzeugstruktur ausbildenden niederenergetischen Grenzschicht abzulenken;
wobei der Lufteinlass (100) ferner ein Gehäuse (130) aufweist, das die Erhebung (120) umgibt, so dass die Öffnung (110) zum Aufnehmen von Luft für das Triebwerk (70) zwischen dem Gehäuse (130) und der Erhebung (120) ausgebildet ist;
wobei eine vordere Randfläche (131) des Gehäuses (130) bezogen auf eine Längsachse (40) der Flugzeugstruktur (10) weiter hinten an der Flugzeugstruktur angeordnet ist als ein vorderster Punkt der Erhebung (120);
wobei
die Erhebung (120) in einem Übergangsbereich zwischen dem Flügel (30) und dem Rumpf (20) angeordnet ist;
**dadurch gekennzeichnet, dass** entlang der Längsachse Stationen definiert sind, wobei an jeder Station
die Erhebung (120) asymmetrisch bezüglich einer Winkelhalbierenden (37) eines Winkels (35) zwischen der Oberfläche (31) des Flügels (30) und der Oberfläche (21) des Rumpfs (20) verläuft;
der Winkel (35) zwischen dem Flügel (30) und dem Rumpf (20) aufgespannt ist, wobei der Winkel (35) durch eine Position und Ausrichtung einer Unterseite (31) des Flügels (30) und einer Seitenfläche des Rumpfs (20) an dem Punkt definiert ist, an dem der Flügel (30) und der Rumpf (20) aneinander angrenzen oder aufeinander treffen;
eine Höhenlinie (128A, 128B, 128C) der Erhebung (120) an jeder Station entlang der Längsachse (40) in einer Vorderansicht definiert ist;
der Winkel (35) und die Winkelhalbierende (37) an jeder Station entlang der Längsachse (40) definiert sind;
eine Konturlinie (122) in einer Vorderansicht dem Profil der Oberfläche der Erhebung (120) an ihrem von der Oberfläche des Flügels (30) und des Rumpfs (20) am weitesten entfernten Bereich entspricht;
die Konturlinie (122) an ihrem einen Ende mit einem ersten Krümmungsradius (124) an die Oberfläche des Flügels (30) angrenzt und an dem anderen Ende mit einem zweiten Krümmungsradius (126) an die Oberfläche des Rumpfs (20) angrenzt;
die Konturlinie (122) mehrfach gekrümmt ist;
von dem Flügel (30) zu dem Rumpf, wobei der Flügel in einer Vorderansicht ein rechter Flügel ist, die Konturlinie (122) eine rechte Krümmung enthält, die in eine linke Krümmung übergeht, die wiederum in eine rechte Krümmung übergeht;
der erste Krümmungsradius (124) näher an dem Flügel als an dem Rumpf angeordnet ist;
der zweite Krümmungsradius (126) näher an dem Rumpf als an dem Flügel angeordnet ist;
der erste Krümmungsradius (124) größer als der zweite Krümmungsradius (126) ist, so dass die Krümmung der Konturlinie (122) im Bereich des ersten Krümmungsradius (124) weniger ausgeprägt ist als im Bereich des zweiten Krümmungsradius (126);
die Konturlinie (122) und die Höhenlinien (128A, 128B, 128C) der Erhebung (120) bezüglich der Winkelhalbierenden (37) asymmetrisch sind, so dass das Grundprofil der Höhenlinien (128A, 128B, 128C) der Erhebung (120) dem Profil der Konturlinie entspricht, wobei die jeweilige Form gleich ist, wobei nur die Abmessungen unterschiedlich sind.

2. Flugzeugstruktur (10) nach Anspruch 1,
wobei der Flügel (30) die Erhebung (120) in einer Richtung entlang einer Längsachse (40) der Flugzeugstruktur (10) überlappt.

3. Flugzeugstruktur (10) nach Anspruch 1 oder 2,
wobei der Flügel (30) das Gehäuse (130) in einer Richtung entlang einer Längsachse (40) der Flugzeugstruktur (10) überlappt.

4. Flugzeugstruktur (10) nach einem der vorhergehenden Ansprüche,
wobei die Öffnung (110) von dem Gehäuse (130), der Oberfläche (21) des Rumpfs (20), der Erhebung (120) und der Oberfläche (31) des Flügels (30) umschlossen ist.

5. Flugzeugstruktur (10) nach einem der vorhergehenden Ansprüche,
wobei das Gehäuse (130) eine vordere Randfläche (131) aufweist, die einen Rand der Öffnung definiert;
wobei die vordere Randfläche (131) abgerundet ist.

## Revendications

1. Structure d'aéronef (10), comportant :
un fuselage (20) ;
une aile (30) ;
une entrée d'air (100) pour recevoir de l'air pour un moteur (70) ;
dans laquelle l'entrée d'air (100) comporte une élévation (120) qui s'élève à partir d'une surface (21) du fuselage (20) et à partir d'une surface (31) de l'aile (30), dans laquelle l'élévation (120) est configurée pour dévier, à partir d'une ouverture de l'entrée d'air (100), un fluide de couche limite d'une couche limite à faible énergie se formant sur une surface extérieure de la structure d'aéronef en vol ;
dans laquelle l'entrée d'air (100) comporte en outre un boîtier (130) qui entoure l'élévation (120), de sorte que l'ouverture (110) pour recevoir de l'air pour le moteur (70) est formée entre le boîtier (130) et l'élévation (120) ;
dans laquelle une surface de bord avant (131) du boîtier (130) est située, par rapport à un axe longitudinal (40) de la structure d'aéronef (10), plus loin vers l'arrière de la structure d'aéronef qu'un point le plus en avant de l'élévation (120) ;
dans laquelle
l'élévation (120) est agencée dans une région de transition entre l'aile (30) et le fuselage (20) ;
**caractérisée en ce que** des stations sont définies le long de l'axe longitudinal, au niveau de chaque station
l'élévation (120) s'étend de manière asymétrique par rapport à une bissectrice (37) d'un angle (35) entre la surface (31) de l'aile (30) et la surface (21) du fuselage (20) ;
ledit angle (35) est enjambé entre l'aile (30) et le fuselage (20), l'angle (35) étant défini par une position et une orientation d'un côté inférieur (31) de l'aile (30) et d'une surface latérale du fuselage (20) au niveau du point au niveau duquel l'aile (30) et le fuselage (20) sont adjacents l'un à l'autre ou se rencontrent l'un l'autre ;
une ligne de hauteur (128A, 128B, 128C) de l'élévation (120) est définie au niveau de chaque station le long de l'axe longitudinal (40) dans une vue de face ;
l'angle (35) et la bissectrice (37) sont définis au niveau de chaque station le long de l'axe longitudinal (40) ;
une ligne de contour (122) correspond, dans une vue de face, au profil de la surface de l'élévation (120) au niveau de sa région la plus éloignée de la surface de l'aile (30) et du fuselage (20) ;
au niveau de sa première extrémité, la ligne de contour (122) jouxte la surface de l'aile (30) avec un premier rayon de courbure (124) et, au niveau de l'autre extrémité, jouxte la surface du fuselage (20) avec un second rayon de courbure (126) ;
la ligne de contour (122) est incurvée de manière multiple ;
de l'aile (30) au fuselage, l'aile étant une aile droite vue dans une vue de face, la ligne de contour (122) contient une courbure droite qui se transforme en une courbure gauche qui à son tour se transforme en une courbure droite ;
le premier rayon de courbure (124) est agencé plus près de l'aile que du fuselage ;
le second rayon de courbure (126) est agencé plus près du fuselage que de l'aile ;
le premier rayon de courbure (124) est plus grand que le second rayon de courbure (126) de sorte que la courbure de la ligne de contour (122) dans la région du premier rayon de courbure (124) est moins prononcée que dans la région du second rayon de courbure (126) ;
par rapport à la bissectrice (37), la ligne de contour (122) et les lignes de hauteur (128A, 128B, 128C) de l'élévation (120) sont asymétriques de sorte que le profil de base des lignes de hauteur (128A, 128B, 128C) de l'élévation (120) correspond au profil de la ligne de contour, la forme respective étant la même avec seulement les dimensions qui sont différentes.

2. Structure d'aéronef (10) selon la revendication 1,
dans laquelle l'aile (30) chevauche l'élévation (120) dans une direction le long d'un axe longitudinal (40) de la structure d'aéronef (10).

3. Structure d'aéronef (10) selon la revendication 1 ou 2,
dans laquelle l'aile (30) chevauche le boîtier (130) dans une direction le long d'un axe longitudinal (40) de la structure d'aéronef (10).

4. Structure d'aéronef (10) selon l'une des revendications précédentes,
dans laquelle l'ouverture (110) est entourée par le boîtier (130), la surface (21) du fuselage (20), l'élévation (120) et la surface (31) de l'aile (30).

5. Structure d'aéronef (10) selon l'une des revendications précédentes,
dans laquelle le boîtier (130) comporte une surface de bord avant (131) qui définit un bord de l'ouverture ;
dans laquelle la surface de bord avant (131) est arrondie.
